# EUROPÄISCHE PATENTSCHRIFT

(11) **EP 2 841 861 B1**
(45) Veröffentlichungstag und Bekanntmachung des Hinweises auf die Patenterteilung: **13.04.2016**
(21) Anmeldenummer: 13706555.3
(22) Anmeldetag: 28.02.2013
(51) Int. Cl.: F27B 7/33, C21B 13/08, F27D 15/00

(54) **ANLAGE UND VERFAHREN ZUR WÄRMEBEHANDLUNG VON KÖRNIGEM UND STÜCKIGEM MATERIAL**
SYSTEM AND METHOD FOR HEAT TREATMENT OF GRANULAR AND LUMPY MATERIAL
INSTALLATION ET PROCÉDÉ DE TRAITEMENT THERMIQUE DE MATIÈRES GRANULAIRES ET EN MORCEAUX

(30) Priorität: 24.04.2012 DE 102012103588
(43) Veröffentlichungstag der Anmeldung: 04.03.2015
(73) Patentinhaber: ThyssenKrupp Industrial Solutions AG, 45143 Essen (DE)
(72) Erfinder: GRUND, Guido, 59457 Werl (DE); MILEWSKI, Günther, 59320 Ennigerloh (DE); NOWATSCHIN, Markus, 59065 Hamm (DE)
(74) Vertreter: ThyssenKrupp Intellectual Property GmbH
(86) Internationale Anmeldenummer: PCT/EP2013/054063
(87) Internationale Veröffentlichungsnummer: WO 2013/159966

(56) Entgegenhaltungen:
- DE-C- 707 062
- DE-C1- 3 347 686

## Beschreibung

Die Erfindung betrifft eine Anlage und ein Verfahren zur Wärmebehandlung von körnigem und stückigem Material, insbesondere von Ferronickelerz, mit einem Drehrohrofen zur Vorreduktion des Materials und einem Elektroofen zum Schmelzen des Materials.

Eine solche Prozesskombination wird im Englischen auch als "RKEF-Process" bezeichnet. Hierbei wird das zu behandelnde Material im Drehrohrofen für die nachfolgende Behandlung im Elektroofen in geeigneter Weise vorbereitet. Dabei erfolgt im Drehrohrofen üblicherweise eine Trocknung, Calcinierung und eine Vorreduktion. Im Elektroofen wird das Material dann aufgeschmolzen und komplett reduziert.

Das Ausgangsmaterial der Drehrohröfen enthält material- oder prozessbedingt Überkorn, d. h. Material, das eine so große Körnung besitzt, dass es im nachgeschalteten Elektroofen nicht verarbeitet werden kann. Es kommt hinzu, dass das Überkorn auch unterschiedliche chemische und physikalische Eigenschaften aufweist. In der DE 35 27 621 A1 wird daher zur Abtrennung des Überkorns ein am Austragsende des Drehrohrofens geneigt angeordneter Rost vorgesehen. Das Überkorn wird dann ausgeschleust, sodass nur der verbleibende Teil dem Elektroofen zugeführt wird. Diese Vorgehensweise ist jedoch wenig energieeffizient, da sowohl die im Überkorn enthaltene fühlbare Wärme nicht genutzt wird, als auch bei manchen Prozessen die enthaltene chemische Energie ggf. durch Re-Oxidation, Re-Carbonatisierung oder Re-Hydratisierung vernichtet wird.

Alternativ zur Absiebung des Überkorns ist es aus der Praxis daher bekannt, das gesamte heiße Material aus den Drehrohrofen zunächst einem Brecher aufzugeben, in dem das Überkorn gebrochen wird. Die Materialtemperatur des Ofenprodukts führt aber zur Erwärmung des Brechers, speziell des mit dem Überkorn in Kontakt kommenden Konstruktionswerkstoff der Brechstufe. Bei erhöhter Temperatur verschlechtern sich die Materialeigenschaften des Konstruktionswerkstoffes, sodass dieser gekühlt werden muss und für den Konstruktionswerkstoff auch sehr hochwertige Materialien zum Einsatz kommen. Auch das Unterkorn erwärmt den Brecher und erhöht somit den Verschleiß und den Kühlbedarf der Brechstufe.

Aus der DE 37 13 883 A1 ist ein Verfahren zur Herstellung von Ferrochrom mit einem Kohlenstoffgehalt von 0,02 bis 10% durch thermische Reduktion von Pellets bekannt, wobei die in einer Pelletiervorrichtung gebildeten Pellets eisenhaltiges Chromerz, Kohle sowie ein Pelletiermittel enthalten und zunächst in einem Drehrohrofen unter Zugabe von Kohle oder Koks reduziert werden und anschließend das Ferrochroms aus den reduzierten Pellets in einem Schmelzofen erschmolzen wird. Zwischen dem Drehrohrofen und dem Schmelzofen erfolgt eine Heißabsiebung in 3 Korngrößen, wobei die Pelletfraktion mit einem Teilchendurchmesser größer 6 mm in den Schmelzofen gelangt, während die Kohlefraktion mit einem Teilchendurchmesser von 0,1 bis 5 mm in den Drehrohrofen und die Feinkornfraktion mit einem Teilchendurchmesser kleiner 0,1 mm in die Pelletiervorrichtung zurückgeführt wird.

Die DE 33 47 686 A1 beschreibt ein Verfahren zur Herstellung von Ferrochrom aus eisenhaltigen Chromerzen durch Erhitzen eines Gemisches, das aus Chromerzen, festen kohlenstoffhaltigen Brennstoffen und Schlackebildnern besteht, in einem Drehofen und anschließendes Erschmelzen des Ferrochroms aus dem Reaktionsprodukt, wobei das Reaktionsprodukt aus dem Drehrohrofen vor dem Erschmelzen abgekühlt, zerkleinert und einem Magnetscheider zugeführt wird, sodass lediglich eine metallhaltige Legierungsfraktion in den Schmelzofen gelangt.

Der Erfindung liegt daher die Aufgabe zugrunde, die Anlage und das Verfahren mit einer Kombination eines Drehrohrofens und eines nachgeschalteten Elektroofens hinsichtlich des Energieverbrauches zu verbessern.

Erfindungsgemäß wird diese Aufgabe durch die Merkmale der Ansprüche 1 und 10 gelöst.

Die erfindungsgemäße Anlage zur Wärmebehandlung von körnigem und stückigem Material, insbesondere von Ferronickelerz, weist einen Drehrohrofen zur Vorreduktion des Materials und einen Elektroofen zum Schmelzen des vorreduzierten Materials auf. Zwischen Drehrohrofen und Elektroofen sind zunächst eine Siebeinrichtung zur Abtrennung von Überkorn und anschließend ein Brecher zur Zerkleinerung des Überkorns vorgesehen.

Beim erfindungsgemäßen Verfahren zur Wärmebehandlung von körnigem und stückigem Material, insbesondere von Ferronickelerz, wird das Material zunächst in einem Drehrohrofen vorreduziert, bevor es in einem Elektroofen aufgeschmolzen wird. Das vorreduzierte Material aus dem Drehrohrofen wird jedoch für die Aufgabe in den Elektroofen zunächst in einer Siebeinrichtung ausgesiebt und lediglich das verbleibende, heiße Überkorn wird anschließend in einem Brecher zerkleinert, bevor es dem Elektroofen zugeführt wird.

Nachdem das Überkorn im heißen Zustand zerkleinert wird geht keine Wärme verloren, weiterhin wird der Brecher nicht mit dem Unterkorn, welches üblicherweise 90-99% des gesamten Materials ausmacht, thermisch belastet wird. Es ist somit mit einem geringeren Verschleiß zu rechnen und es ist ein geringerer Kühlbedarf des Brechers erforderlich.

Weitere Ausgestaltungen der Erfindung sind Gegenstand der Unteransprüche.

Gemäß einer bevorzugten Ausgestaltung der Erfindung ist die Siebeinrichtung als mit dem Drehrohrofen mitrotierendes Trommelsieb ausgebildet. Es kann dabei insbesondere auch vorgesehen werden, dass das Auslassende des Drehrohrofens als Trommelsieb ausgebildet ist. Die Siebeinrichtung kann aber beispielsweise auch als horizontales oder geneigtes statisches oder agitiertes Sieb bzw. Sieben ausgebildet werden.

Weiterhin ist dem Elektroofen ein Heißgutbunker vorgeschaltet, der vorzugsweise als gemeinsamer Heißgutbunker für die Siebeinrichtung und dem Brecher fungiert.

Eine besonders vorteilhafte Ausgestaltung sieht vor, dass die Siebeinrichtung, der Brecher und der Heißgutbunker in einem gemeinsamen Austragsgehäuse untergebracht sind. Auf diese Weise kann der Falschlufteintrag, der zu einer ungewollten chemischen Veränderung (Re-Oxidation, Re-Carbonatisierung, Re-Hydratisierung) führen könnte, deutlich reduziert werden.

Das Austragsgehäuse kann hierzu insbesondere einen an den Drehrohrofen angekoppelten Einlass und einen mit einem Auslassmechanismus versehenen Auslass aufweisen. Die Siebvorrichtung sieht einen Überkornauslass und einen Unterkornauslass vor, wobei der Überkornauslass über dem Brecher mit dem Heißgutbunker und der Unterkornauslass direkt mit dem Heißgutbunker in Verbindung steht.

Der Brecher wird vorzugsweise durch einen Rollen- oder Walzenbrecher gebildet und sieht zweckmäßigerweise eine auf Wasser, Luft oder Öl basierende Kühleinrichtung auf Ist der Brecher als Walzenbrecher mit wenigstens zwei rotierenden Brechwalzen ausgebildet, ist es besonders vorteilhaft, wenn der sich zwischen den Brechwalzen ausbildende Mahlspalt einstellbar ist. Der Brecher kann aber auch nach dem Prinzip der Schlagzerkleinerung (beispielsweise als Hammerbrecher), der Prallzerkleinerung (beispielsweise als Prallbrecher), der Scherung (beispielsweise als Schredder) oder der Reibung (beispielsweise als Mühle) arbeiten.

Weitere Vorteile und Ausgestaltungen der Erfindung werden anhand der nachfolgenden Beschreibung und der Zeichnung näher erläutert.

In der Zeichnung zeigen
- Fig. 1: eine schematische Ansicht einer erfindungsgemäßen Anlage zur Wärmebehandlung von körnigem und stückigem Gut,
- Fig. 2: eine Schnittdarstellung im Bereich des Austragsgehäuses in der Seitenansicht,

- Fig. 3: eine Schnittdarstellung im Bereich des Austragsgehäuses in der Vorderansicht.

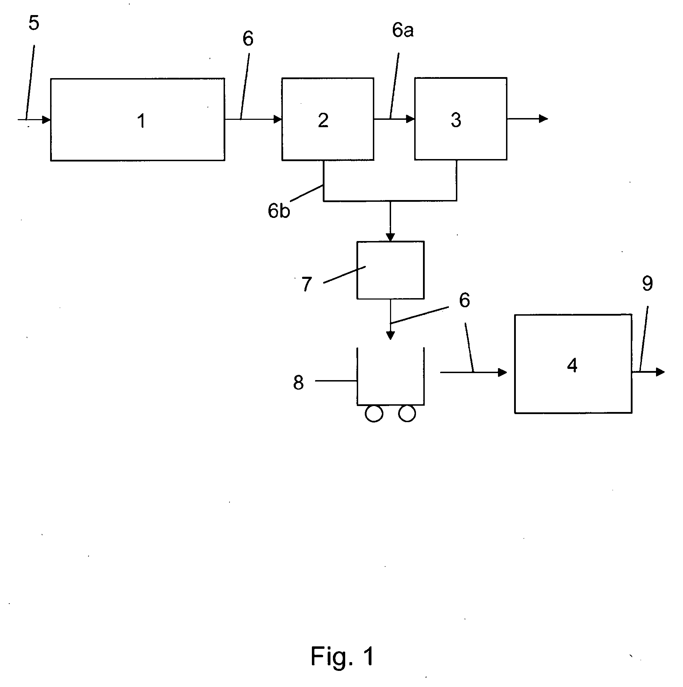

Die in Fig. 1 dargestellte Anlage zur Wärmebehandlung von körnigem und stückigem Material, beispielsweise Ferronickelerz, besteht im Wesentlichen aus einem Drehrohrofen 1, einer Siebeinrichtung 2, einen Brecher 3 und einem Elektroofen 4.

Das dem Drehrohrofen 1 aufzugebende körnige und stückige Material 5 wird im Drehrohrofen 1 getrocknet, calciniert und vorreduziert. Die Aufgabefeuchte liegt normalerweise in einem Bereich von 18-23%. Das vorreduzierte Material 6 aus dem Drehrohrofen weist üblicherweise für Eisen einen Reduktionsgrad von 80% und für Nickel einen Reduktionsgrad von 20% auf. Das vorreduzierte Material liegt zu 90 bis 99% in einem Kornbereich von 0-100 mm vor. 1-10% des Materials ist üblicherweise Überkorn und kann eine Größe bis zu 1000 mm aufweisen.

Je nach Ausgestaltung des Elektroofens 4 darf das dort aufzugebende Material eine bestimmte Korngröße nicht überschreiten. Diese liegt üblicherweise bei 20-100 mm je nach Schmelzofendesign. Das vorreduzierte Material 6 wird daher zunächst der Siebeinrichtung 2 aufgegeben, wo das Überkorn 6a vom Unterkorn 6b getrennt wird. Während das Unterkorn 6b direkt in einen Heißgutbunker 7 gelangt, wird das Überkorn 6a im Brecher 3 auf die gewünschte Korngröße zerkleinert, bevor es auch in den gemeinsamen Heißgutbunker 7 kommt.

Von dort gelangt das vorreduzierte Material 6 auf übliche Art und Weise, beispielsweise mit Hilfe eines Transportbehälter 8, in den Elektroofen 4, in dem das Material aufgeschmolzen und komplett reduziert wird, sodass fertig reduziertes Material 9, beispielsweise Ferronickel, entsteht.

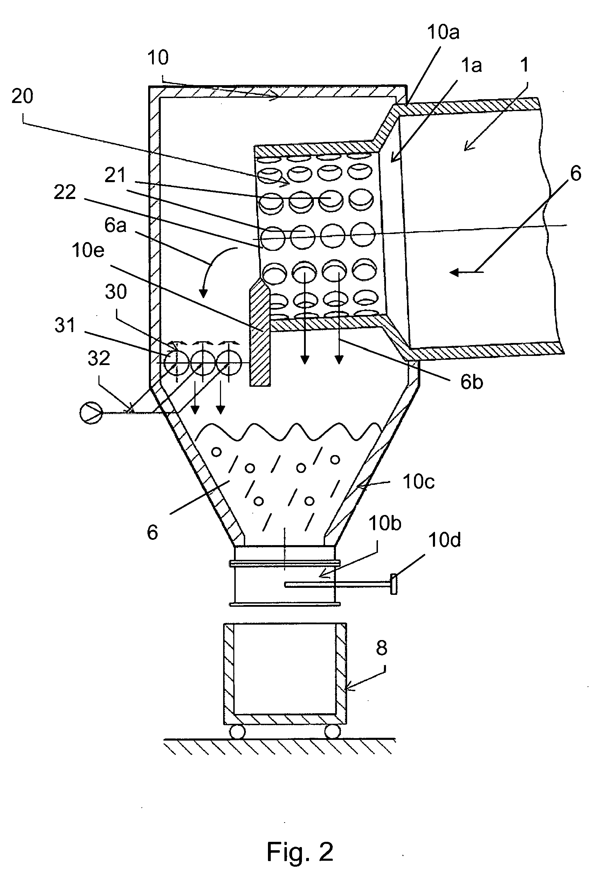

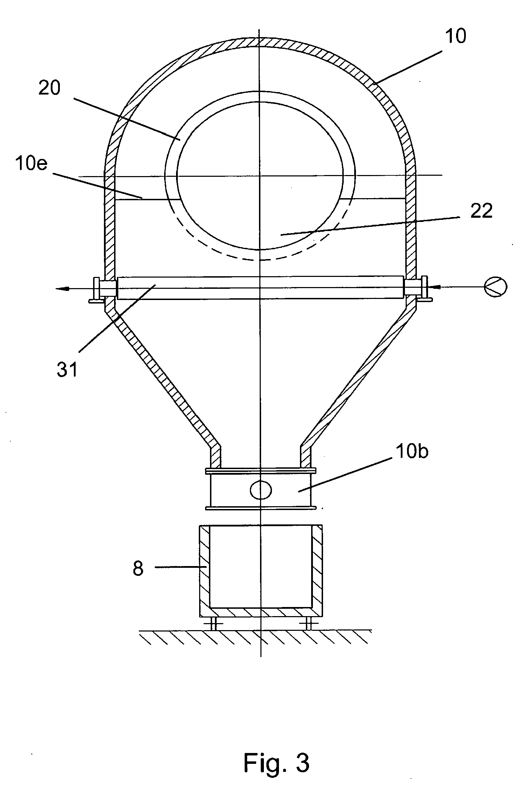

Anhand der Figuren 2 und 3 wird im Folgenden eine konkrete Ausgestaltung der Erfindung näher erläutert.

Im dargstellten Ausführungsbeispiel wird die Siebeinrichtung durch ein Trommelsieb 20 gebildet, welches mit dem Drehrohrofen 1 rotiert. Im konkreten Fall ist das Auslassende 1a des Drehrohrofens 1 als Trommelsieb 20 ausgebildet. Der Drehrohrofen und damit auch das Trommelsieb sind in Richtung des Auslassendes 1a gegenüber der Horizontalen leicht nach untern geneigt, um den Materialtransport sicherzustellen.

Das Trommelsieb 20 weist einen Unterkornauslass 21 auf, der durch einen Vielzahl von über den Umfang verteilt angeordneten Sieböffnungen 21 gebildet wird, über den das Unterkorn 6b nach unten ausfällt. Das Überkorn 6a hingegen, welches nicht durch die Sieböffnung 21 nach unten fällt, gelangt zum Überkornauslass 22, der durch das Ende des Trommelsiebes 20 gebildet wird und fällt von dort nach unten in den als Walzenbrecher 30 ausgebildeten Brecher. Der Walzenbrecher 30 ist mit mehreren, parallel zueinander angeordneten Rollen oder Walzen 31 ausgebildet, wobei zwischen den Rollen/Walzen ein einstellbarer Mahlspalt verbleibt. Über die Größe des Mahlspaltes kann die Korngröße des zerkleinerten Materials eingestellt werden. Üblicherweise werden alle Rollen angetrieben, wobei es zweckmäßig sein kann, wenn wenigstens eine Rolle/Walze entgegengesetzt zu einer benachbarten Rolle/Walze rotiert.

Aufgrund der hohen thermischen Belastung des Walzenbrechers 30 ist weiterhin eine auf Wasser, Luft oder Öl basierende Kühleinrichtung 32 zur Kühlung der Rollen/Walzen 31 vorgesehen.

Sowohl das Trommelsieb 20 als auch der Walzenbrecher 30 sind in einem gemeinsamen Austragsgehäuse 10 angeordnet, das einen Einlass 10a und einen Auslass 10b aufweist. Das stationäre Austragsgehäuse 10 ist mit seinem Einlass 10a gasdicht an den Drehrohrofen 1 angekoppelt, sodass das am Ende des Drehrohrofens 1 vorgesehene Trommelsieb 20 im oberen Bereich des Austragsgehäuses 10 in dieses hineinragt. Der untere Teil 10c ist trichterförmig ausgestaltet und bildet den Heißgutbunker 7. Der Auslass 10b des Austragsgehäuses 10 ist an Ende des unteren Teils 10c vorgesehen und ist mit einem, hier als Schieber dargestellten Auslassmechanismus 10d versehen. Über diesen Auslass 10b gelangt das vorreduzierte Material 6 in den Transportbehälter 8.

Zwischen Trommelsieb 20 und Walzenbrecher 30 ist weiterhin eine Trennwand 10e anageordnet, um einerseits zu verhindern, dass über den Unterkornauslass 21 ausgesiebtes Unterkorn 6b zum Walzenbrecher 30 gelangt und andererseits sicherzustellen, dass das Überkorn 6a unter Umgehung des Walzenbrechers 30 in den als Heißgutbunker fungierenden unteren Teil 10a des Austragsgehäuses gelangt.

Die Unterbringung der Siebeinrichtung, des Brechers und des Heißgutbunkers in einem gemeinsamen Austragsgehäuse hat den Vorteil, dass aufgrund der kurzen Wege die Wärmeverluste minimiert werden und außerdem der Eintrag von Falschluft weitgehend verhindert werden kann.

Darüber hinaus ist eine erhöhte Sicherheit für das Betriebspersonal gegeben, da außer dem Material, welches in den Elektroofen gelangt, kein zusätzliches heißes Material aus dem Prozess ausgeschleust werden muss. Durch das Zusammenspiel von Siebeinrichtung und Brecher muss nur das anfallende Überkorn vom Brecher behandelt werden, wodurch eine deutliche Reduzierung des Verschleißes im Brecher erzielt wird. Außerdem verbessert sich die Prozesskontrolle, da das unkontrollierte Ausschleusen von Material (Überkorn) einer bestimmten chemischen Zusammensetzung entfällt.

## Patentansprüche

1. Anlage zur Wärmebehandlung von körnigem und stückigem Material (5) mit einem Drehrohrofen (1) zur Vorreduktion des Materials und einem Elektroofen zum Schmelzen (4) des vorreduzierten Materials, wobei zwischen Drehrohrofen (1) und Elektroofen (4) zunächst eine Siebeinrichtung (2) zur Abtrennung von Überkorn (6a) und anschließend ein Brecher (3) zur Zerkleinerung des Überkorns (6a) angeordnet sind.

2. Anlage nach Anspruch 1, **dadurch gekennzeichnet, dass** die Siebeinrichtung (2) als mit dem Drehrohrofen (1) mitrotierendes Trommelsieb (20) ausgebildet ist.

3. Anlage nach Anspruch 1, **dadurch gekennzeichnet, dass** das Auslassende (1a) des Drehrohrofens (1) als Trommelsieb (20) ausgebildet ist.

4. Anlage nach Anspruch 1, **dadurch gekennzeichnet, dass** dem Elektroofen (4) ein Heißgutbunker (7) vorgeschaltet ist.

5. Anlage nach Anspruch 1, **dadurch gekennzeichnet, dass** sich an die Siebeinrichtung (2) und den Brecher (3) ein gemeinsamer Heißgutbunker (7) anschließt.

6. Anlage nach Anspruch 4, **dadurch gekennzeichnet, dass** die Siebeinrichtung (2), der Brecher (3) und der Heißgutbunker (7) in einem gemeinsamen Austragsgehäuse (10) untergebracht sind.

7. Anlage nach Anspruch 6, **dadurch gekennzeichnet, dass** Austragsgehäuse (10) einen an den Drehrohrofen (1) angekoppelten Einlass (10a) und einen mit einem Auslassmechanismus (10d) versehenen Auslass (10b) aufweist.

8. Anlage nach Anspruch 4, **dadurch gekennzeichnet, dass** die Siebvorrichtung (2) einen Überkornauslass (22) und einen Unterkornauslass (21) aufweist und der Überkornauslass (22) über den Brecher (3) mit dem Heißgutbunker (7) und der Unterkornauslass (21) direkt mit dem Heißgutbunker (7) in Verbindung steht.

9. Anlage nach Anspruch 1, **dadurch gekennzeichnet, dass** der Brecher (3) als Rollen- oder Walzenbrecher (30) ausgebildet ist.

10. Verfahren zur Wärmebehandlung von körnigem und stückigem Material (5) wobei das Material (5) zunächst in einem Drehrohrofen (1) vorreduziert wird, anschließend etwaiges Überkorn (6a in einem Brecher (3) zerkleinert wird und das Material schließlich in einem Elektroofen (4) aufgeschmolzen wird, wobei das vorreduzierte Material aus dem Drehrohrofen für die Aufgabe in den Elektroofen (4) zunächst in einer Siebeinrichtung (2) ausgesiebt wird und lediglich das verbleibende, noch heiße Überkorn (6a im Brecher (3) zerkleinert wird, bevor es dem Elektroofen (4) zugeführt wird.

11. Verfahren nach Anspruch 10, **dadurch gekennzeichnet, dass** das ausgesiebte Unterkorn (6b) der Siebeinrichtung (2) und das im Brecher (3) zerkleinerte Überkorn (6a) in einem gemeinsamen Heißgutbunker (7) gesammelt und von dort gemeinsam ausgetragen wird.

12. Verfahren nach Anspruch 10, **dadurch gekennzeichnet, dass** die Temperaturdifferenz des aus dem Drehrohrofen (1) kommenden voreduzierten Materials (6) und dem zerkleinerten Material nach dem Brecher (3) maximal 10 °C beträgt.

13. Verfahren nach Anspruch 10, **dadurch gekennzeichnet, dass** maximal 20%, vorzugsweise maximal 10%, des Materials aus dem Drehrohrofen (1) als Überkorn (6b) zum Brecher (3) gelangt.

14. Verfahren nach Anspruch 10, **dadurch gekennzeichnet, dass** das Sieben in der Siebeinrichtung (2), das Brechen im Brecher (3) und das Sammeln des Materials im Heißgutbunker (7) in einem gemeinsamen Austragsgehäuse (10) erfolgt.

## Claims

1. System for heat treatment of granular and lumpy material (5), having a rotary kiln (1) for the preliminary reduction of the material, and having an electric furnace for melting (4) the pre-reduced material, wherein the rotary kiln (1) and electric furnace (4) have arranged between them first a screening device (2) for separating off oversized particles (6a) and then a crusher (3) for comminuting the oversized particles (6a).

2. System according to Claim 1, **characterized in that** the screening device (2) is designed in the form of a drum-type screen (20) which rotates along with the rotary kiln (1).

3. System according to Claim 1, **characterized in that** the outlet end (1a) of the rotary kiln (1) is designed in the form of the drum-type screen (20).

4. System according to Claim 1, **characterized in that** a hot-material bunker (7) is arranged upstream of the electric furnace (4).

5. System according to Claim 1, **characterized in that** the screening device (2) and the crusher (3) are followed by a common hot-material bunker (7).

6. System according to Claim 4, **characterized in that** the screening device (2), the crusher (3) and the hot-material bunker (7) are accommodated in a common discharge housing (10).

7. System according to Claim 6, **characterized in that** the discharge housing (10) has an inlet (10a), which is coupled to the rotary kiln (1), and an outlet (10b), which is provided with an outlet mechanism (10d) .

8. System according to Claim 4, **characterized in that** the screening apparatus (2) has an oversized-particle outlet (22) and an undersized-particle outlet (21), and the oversized-particle outlet (22) is connected to the hot-material bunker (7) via the crusher (3) and the undersized-particle outlet (21) is connected directly to the hot-material bunker (7).

9. System according to Claim 1, **characterized in that** the crusher (3) is designed in the form of a roller crusher (30).

10. Method for heat treatment of granular and lumpy material (5), wherein the material is first pre-reduced in a rotary kiln (1), then any oversized particles (6a) are comminuted in a crusher (3) and the material is finally melted in an electric furnace, wherein, for charging into the electric furnace (4), the pre-reduced material from the rotary kiln is first screened out in a screening device (2) and only the remaining, still hot oversized particles (6a) are comminuted in the crusher (3), before being fed to the electric furnace (4).

11. Method according to Claim 10, **characterized in that** the screened-out undersized particles (6b) of the screening device (2) and the oversized particles (6a) comminuted in the crusher (3) are collected in a common hot-material bunker (7) and discharged together from there.

12. Method according to Claim 10, **characterized in that** the temperature difference between the pre-reduced material (6) coming from the rotary kiln (1) and the comminuted material downstream of the crusher (3) is a maximum of 10°C.

13. Method according to Claim 10, **characterized in that** a maximum of 20%, preferably a maximum of 10%, of the material passes out of the rotary kiln (1), as oversized particles (6b), to the crusher (3).

14. Method according to Claim 10, **characterized in that** the operations of screening in the screening device (2), of crushing in the crusher (3) and of collecting the material in the hot-material bunker (7) take place in a common discharge housing (10).

## Revendications

1. Installation pour le traitement thermique de matières granulaires et en morceaux (5) avec un four tubulaire rotatif (1) pour la pré-réduction des matières et un four électrique pour la fusion (4) des matières pré-réduites, dans laquelle d'abord un dispositif de criblage (2) pour la séparation du refus supérieur (6a) et ensuite un concasseur (3) pour le broyage du refus supérieur (6a) sont disposés entre le four tubulaire rotatif (1) et le four électrique (4).

2. Installation selon la revendication 1, **caractérisée en ce que** le dispositif de criblage (2) est réalisé sous la forme d'un tamis à tambour (20) tournant avec le four tubulaire rotatif (1).

3. Installation selon la revendication 1, **caractérisée en ce que** l'extrémité de sortie (1a) du four tubulaire rotatif (1) est réalisée en forme de tamis à tambour (20).

4. Installation selon la revendication 1, **caractérisée en ce qu'**un silo à matières chaudes (7) est disposé en amont du four électrique (4).

5. Installation selon la revendication 1, **caractérisée en ce qu'**un silo à matières chaudes commun (7) se raccorde au dispositif de criblage (2) et au concasseur (3).

6. Installation selon la revendication 4, **caractérisée en ce que** le dispositif de criblage (2), le concasseur (3) et le silo à matières chaudes (7) sont installés dans une enceinte d'extraction commune (10).

7. Installation selon la revendication 6, **caractérisée en ce que** l'enceinte d'extraction (10) présente une entrée (10a) couplée au four tubulaire rotatif (1) et une sortie (10b) dotée d'un mécanisme de sortie (10d).

8. Installation selon la revendication 4, **caractérisée en ce que** le dispositif de criblage (2) présente une sortie de refus supérieur (22) et une sortie de refus inférieur (21) et la sortie de refus supérieur (22) est en communication avec le silo à matières chaudes (7) via le concasseur (3) et la sortie de refus inférieur (21) est en communication directement avec le silo à matières chaudes (7).

9. Installation selon la revendication 1, **caractérisée en ce que** le concasseur (3) est réalisé sous la forme d'un concasseur à galets ou d'un concasseur à cylindres (30).

10. Procédé pour le traitement thermique de matières granulaires et en morceaux (5), dans lequel on pré-réduit d'abord les matières (5) dans un four tubulaire rotatif (1), ensuite on broie un éventuel refus supérieur (6a) dans un concasseur (3) et on fond finalement les matières dans un four électrique (4), dans lequel on crible d'abord dans un dispositif de criblage (2) les matières pré-réduites sortant du four tubulaire rotatif pour les charger dans le four électrique (4) et on broie uniquement le refus supérieur restant encore chaud (6a) dans le concasseur (3), avant de l'envoyer au four électrique (4).

11. Procédé selon la revendication 10, **caractérisé en ce que** l'on collecte le refus inférieur (6b) du dispositif de criblage (2) et le refus supérieur (6a) broyé dans le concasseur (3) dans un silo à matières chaudes commun (7) et on les en extrait en commun.

12. Procédé selon la revendication 10, **caractérisé en ce que** la différence de température entre les matières pré-réduites (6) sortant du four tubulaire rotatif (1) et les matières broyées après le concasseur (3) vaut au maximum 10°C.

13. Procédé selon la revendication 10, **caractérisé en ce qu'**un maximum de 20 %, de préférence un maximum de 10 %, des matières sortant du four tubulaire rotatif (1) arrivent au concasseur (3) en tant que refus supérieur (6b).

14. Procédé selon la revendication 10, **caractérisé en ce que** le criblage dans le dispositif de criblage (2), le broyage dans le concasseur (3) et la collecte des matières dans le silo à matières chaudes (7) sont effectués dans une enceinte d'extraction commune (10).
